# EUROPEAN PATENT SPECIFICATION

(11) **EP 2 502 504 B1**
(45) Date of publication and mention of the grant of the patent: **04.06.2014**
(21) Application number: 11190781.2
(22) Date of filing: 25.11.2011
(51) Int. Cl.: A23L 1/22, A23L 1/18

(54) **Method for flavoring unpopped popcorn kernels and unpopped popcorn kernel product obtained by said method**
Verfahren zum Aromatisieren von nicht geplatzten Popkorn-Körnern und Produkt mit Maikörnern für Popkorn aus diesem Verfahren
Procédé pour assaisonner des grains de maïs soufflé non éclatés et produit de grains de maïs soufflé non éclatés obtenu selon ledit procédé

(30) Priority: 22.03.2011 ES 201130410
(43) Date of publication of application: 26.09.2012
(73) Proprietor: Tanio, S.A., 43205 Reus (ES)
(72) Inventor: Gómez Arroyo, Fátima, 43205 REUS (ES); Durán Vila, Juan Ramón, 43205 REUS (ES)
(74) Representative: Oficina Ponti, SLP

(56) References cited:
- US-A- 4 767 635
- US-A- 5 108 772
- US-A- 5 750 166
- US-A- 5 753 287
- US-A1- 2003 194 472

## Description

The present invention refers to a method for flavoring unpopped popcorn kernels and to an unpopped popcorn kernel product obtained by said method.

### BACKGROUND OF THE INVENTION

The marketing of unpopped kernels packed in bags for microwaves with fat or oil including a suspension flavorant is known. When the kernels are popped, this fat or oil is used as vehicle for the flavorant, making easier to obtain an expanded product ready to be consumed.

The use of fat or oil for flavoring unpopped kernels has a lot of drawbacks. On one hand, the addition of fat or oil requires the use of specific packages resistant for lipid contact, not resulting suitable any kind of package. On the other hand, the addition of fat or oil increases the caloric charge of a product that itself has a lot of calories.

Flavoring processes of unpopped kernels comprising the steps of applying an adhesive liquid and a flavorant on the unpopped popcorn kernels to form a flavorant coating layer on the hull of the kernels are known. US5753287, US5688543, US 5 750 166, US 2003/0194472, FR2680082 and US4767635 disclose processes of this kind.

The processes disclosed in these patents have the advantage that they permit to obtain an unpopped kernel more or less flavored that can be packaged directly in microwave packages with no fat or oil, or to use e.g. in hot air machines, to obtain poppep kernels directly flavored.

Said flavoring processes try to obtain an uniform coating layer strongly adhered that persists during the packaging phase and the expansion phase to guarantee the presence of flavorant. However, in the practice, it has been observed that the kernels treated with these processes have important coating losses after they are popped, which produce a flavor loss. Furthermore, it has been observed that during the flavoring steps important waste of flavorant is produced.

### DESCRIPTION OF THE INVENTION

The object of the present invention is to solve said drawbacks, developing a flavoring process for unpopped popcorn kernels that has the advantage that substantially reduces the waste of flavorant of the state of the art processes, and the advantage that it obtains an unpopped popcorn kernel product with more flavorant and less coating losses after its explosion.

According to this objective, the present invention provides a method for flavoring unpopped popcorn kernels as claimed in claim 1.

In the process of the present invention, powder salt is applied in different steps, alternating a mixture including water and an adhesive and powder salt layers, and keeping the kernels at a temperature from 50°C to 70°C. Thanks to this feature, it has been observed that the waste of powder salt is reduced very significantly, being the application efficiency very higher.

On the other hand, it has been observed that, differently from the state of the art processes, the claimed process does not need a specific step for drying the kernel . Thanks to this feature, the process is quicker and simpler.

Furthermore, the claimed process permits to obtain an unpopped popcorn kernel that has a greater powder salt coating (less coating losses), and an unpopped kernel with more flavor, comprising at least 4.5% by weight of powder salt with respect to the total weight of the unpopped kernels .

Preferably, said mixture including water and adhesive comprises a flavorant.

It has been observed that the addition of flavorant in the mixture increases the flavor fixation.

Again preferably, in step iii), said steps i) and ii) are repeated from 4 to 8 times each. Therefore, a powder salt film is obtained with a good adhesion and an optimum flavor degree.

It has been observed that this brief time interval is enough to fix a powder salt and mixture including water and an adhesive layer in optimal conditions, so that the process is very quick.

Preferably, before step i), a step for pre-heating the kernels at a temperature from 40°C to 50°C is carried out.

It has been observed that this step affects very positively in reducing the waste of powder salt of the process.

Advantageously, before the kernel pre-heating step, a step for treating said kernels with an alkaline solution to increase the permeability of the hull of the kernels is carried out.

Therefore, the fixation of the mixture including water and an adhesive on the kernels is favored.

Again preferably, in steps ii) and iii), said temperature is from 55°C to 65°C.

It has been observed that this temperature range favors very significantly the fixation of the powder salt and the adhesive.

Advantageously, step iii) is carried out keeping the kernels in a continuous movement.

Advantageously, in step ii), a portion of an aroma substitute of the fat is applied.

Preferably, after step iii), the packaging of the unpopped corn kernels with no fat or oil is carried out.

The process of the present invention permits to obtain a flavored unpopped popcorn that can be packaged directly in microwave packages with no fat or oil, or to use e.g. in hot air machines, to obtain popped popcorn directly flavored.

Differently from the state of the art processes, it has been observed that the unpopped kernels treated with the process of the present invention have a higher flavorant proportion that persists during the packaging phase and the expansion of the kernels, so that it is not necessary to use fat or oil when the product is packaged.

### DESCRIPTION OF EXAMPLES

Hereinafter a non-limitative example of one preferred embodiment of the process of the present invention, and a comparative example of one embodiment of a process of the state of the art.

### Example 1 of the process of the present invention for flavoring unpopped popcorn kernels

This example was carried out with 1,500 g of unpopped popcorn kernels, 90 g of powder salt as flavorant and 72 g of adhesive liquid.

The adhesive liquid consisted on an aqueous solution of maltodextrin that presented the following composition by weight:
- 74% of water
- 17% of salt (flavorant)
- 10% of maltodextrin (adhesive).

The process was started heating the kernel on a pan-type coater at a temperature of 43°C and keeping the kernel under a continuous movement inside the pan-type coater.

Once reached the temperature of 43°C, a portion of 12 g of the aqueous solution of maltodextrin was applied on the moving kernels. In the described embodiment, this aqueous solution was applied spraying the liquid on the kernels, but it could be done by any suitable means.

Immediately after applying the adhesive solution, the temperature of the kernel increased up to 60°C providing heat to the pan-type coater , and a portion of 15 g of powder salt was applied to the kernel.

The pan-type coater was kept under continued movement until it was observed that the product was moved uniformly, after about thirty seconds.

Then, the step of adding a portion of adhesive liquid was repeated, applying other 12 g of the aqueous solution of maltedextrin and, immediately after, other 15 g of salt.

In total, the steps of adding adhesive liquid and flavorant were alternated cyclically until each was repeated six times, using in each repetition 12 g of aqueous solution and 15 g of salt.

During the whole process the kernels were kept moving inside the pan-type coater and at temperature about 60°C. The interval between repetitions was lower than 1 minute.

After the last repetition, the kernels presented an uniform coating film and a desired humidity not higher than 15% by weight.

Then the product was packaged with no fat and oil and in packages for microwaves, and it was popped in a microwave oven at 900 W during two minutes.

### Example 2 of the state of the art process for flavoring unpopped popcorn kernels

This example was carried out with 1,500 g of unpopped popcorn kernels , 90 g of powder salt as flavorant and 72 g of adhesive liquid.

The adhesive liquid consisted on an aqueous solution of maltodextrin that presented the following composition by weight:
- 74% of water
- 17% of salt (flavorant)
- 10 of maltodextrin (adhesive)

The process was started placing the corn on a heated pan-type coater under movement. Then, 72 g of adhesive aqueous solution were applied on the kernel progressively and uniformly, keeping the pan-type coater heated and the kernels moving.

Once applied the adhesive solution, the kernels were moved to a second pan-type coater and 90 g of powder salt were added uniformly, keeping the kernels at room temperature.

After about four minutes, it was observed that the pan-type coater moved the product uniformly, so that it was estimated that the coating step of the kernels was already finished.

Then, the kernels coated with flavorant and adhesive solution were dried. To this end, the kernels were kept moving in the second pan-type coater, at a temperature of 65°C, during about ten minutes. After this time, the kernels had the desired humidity (not higher than 15% by weight).

Finally, the kernels were packaged with no fat and oil and they were popped in a microwave oven at 900 W during two minutes.

### Result comparison of example 1 and example 2

To compare both processes, in each of the executed examples data from the following parameters were taken:
- salt waste in the pan-type coater
- coating losses percentage of the popped kernels
- salt percentage of the unpopped kernels
- salt percentage of the popped kernels.

Also a organoleptic analysis of the popped popcorn to value its taste was carried out.

Hereinafter a table with the results of said parameters for each of the executed examples is attached.

| *Parameter* | *Exemple 1: Process of the invention* | *Example 2: State of the art process* |
|---|---|---|
| Salt waste (g) | 12.6 | 50.1 |
| Coating losses of the popped kernels (%) | 1.2 | 2.0 |
| Salt of unpopped kernels (%) | 4.82 | 2.49 |
| Salt of popped kernels (%) | 3.67 | 1.98 |

As shown in the attached table, the waste of salt of example 1 of the process of the present invention is lower than the waste obtained in the example 2 of the state of the art process.

On the other hand, the kernels obtained with the process of the present invention have less coating losses and a higher percentage by weight of flavorant (salt). Particularly, it must be pointed out that the popped kernels obtained with the process of the present invention have a very higher content of salt, which means a stronger taste confirming the organoleptic analysis.

Furthermore, it has been observed that the process of example 1 is so much simpler and quicker than the process of the state of the art example 2, because of the coating process is carried out in less than ten minutes.

E.g. even though reterence is made in the present specification to a flavoring process with powder salt, the same process could be done combining the application of powder salt with several flavors, using optionally an aroma substituting the fat. Similarly, even though in the described example 1 maltodextrin has been used as adhesive, similar results could be obtained using another kind of equivalent adhesive, such as e.g. a food gum. On the other hand, even though in the described examples an aqueous solution has been used, similar results could be obtained using an aqueous suspension of adhesive and/or flavorant.

## Claims

1. Method for flavoring unpopped popcorn kernels comprising the steps of:
i) applying a portion of a mixture including water and an adhesive selected from maltodextrin and food gum on the unpopped kernels ;
ii) after step i), applying a portion of powder salt on said kernels, keeping said kernels at a temperature from 50°C to 70°C, and the step of:
iii) cyclically alternating steps i) and ii) until each of said steps is carried out at least two times to form a coating of salt on said kernels while said kernels are kept at a temperature from 50°C to 70°C, a repetition of any of steps i) and ii) being carried out in a time interval lower than 4 minutes.

2. Method according to anyone of claims 1, wherein said mixture including water and adhesive comprises a flavorant.

3. Method according to anyone of the previous claims, wherein, in step iii), said steps i) and ii) are repeated from 4 to 8 times each.

4. Method according to anyone of the previous claims, wherein, before step i), a step of preheating said kernels at a temperature from 40°C to 50°C is carried out.

5. Method according to claim 4, wherein, before the step of preheating the kernels, a step of treating said kernels with an alkaline solution to increase the permeability of the hull of the kernel is carried out.

6. Method according to anyone of the previous claims, wherein, in steps ii) and iii), said temperature is from 55°C to 65°C.

7. Method according to anyone of the previous claims, wherein step iii) is carried out keeping the kernels under a continuous movement.

8. Method according to anyone of the previous claims, wherein, in step ii), a portion of an aroma substitute of the fat is applied.

9. Method according to anyone of the previous claims, wherein, after step iii), a step of packaging the unpopped corn kernels with no fat or oil is carried out.

10. Unpopped popcorn kernel product obtained by the process according to anyone of claims 1-9, **characterized in that** said kernels include a coating obtained by cyclically alternating the application of adhesive liquid and powder salt and **in that** said kernels comprise at least a 4.5% by weight of salt with respect to the total weight of unpopped kernel.

11. Product according to claim 10, comprising a package for microwaves including a charge of said unpopped kernels.

## Patentansprüche

1. Verfahren zum Aromatisieren von nicht geplatzten Popkorn-Körnern, aufweisend die folgenden Schritte:
i) Aufbringen einer Menge einer Mischung umfassend Wasser und ein Haftmittel, welches ausgewählt ist aus einer Gruppe bestehend aus Maltodextrin und Speisegummi, auf die nicht geplatzten Körner,
ii) nach Schritt i), Aufbringen einer Menge Pudersalz auf die Körner, Halten der Körner auf einer Temperatur von 50°C bis 70°C, und den Schritt des
iii) zyklischen Abwechselns der Schritte i) und ii) bis jeder der Schritte wenigstens zwei Mal durchgeführt wurde, um eine Schicht aus Salz an den Körnern zu bilden während die Körner auf einer Temperatur von 50°C bis 70°C gehalten werden, wobei eine Wiederholung eines jeden der Schritte i) und ii) in einem Zeitintervall von weniger als 4 Minuten durchgeführt wird.

2. Verfahren nach Anspruch 1, bei dem die Mischung aus Wasser und Haftmittel einen Aromastoff umfasst.

3. Verfahren nach einem der vorhergehenden Ansprüche, bei dem, in Schritt iii), die Schritte i) und ii) jeweils 4 bis 8 Mal wiederholt werden.

4. Verfahren nach einem der vorhergehenden Ansprüche, bei dem, vor dem Schritt i), ein Schritt des Vorerhitzens der Körner bei einer Temperatur von 40°C bis 50°C durchgeführt wird.

5. Verfahren nach Anspruch 4, bei dem, vor dem Schritt des Vorerhitzens der Körner, ein Schritt des Behandelns der Körner mit einer alkalischen Lösung durchgeführt wird, um die Durchlässigkeit der Schale des Korns zu erhöhen.

6. Verfahren nach einem der vorhergehenden Ansprüche, bei dem, in den Schritten ii) und iii), die Temperatur 55°C bis 65°C beträgt.

7. Verfahren nach einem der vorhergehenden Ansprüche, bei dem Schritt iii) durchgeführt wird, indem die Körner in einer kontinuierlichen Bewegung gehalten werden.

8. Verfahren nach einem der vorhergehenden Ansprüche, bei dem, in Schritt ii), eine Menge eines Armomaersatzes des Fetts aufgetragen wird.

9. Verfahren nach einem der vorhergehenden Ansprüche, bei dem, nach Schritt iii), ein Schritt des Verpackens der nicht geplatzten Popkorn-Körner ohne Fett oder Öl durchgeführt wird.

10. Erzeugnis aus nicht geplatzten Popkorn-Körnern, das durch das Verfahren nach einem der Ansprüche 1 bis 9 erhalten wurde, **dadurch gekennzeichnet, dass** die Körner eine Schicht umfassen, die durch das zyklische Abwechseln des Aufbringens einer haftenden Flüssigkeit und Pudersalz erhalten wird, und die Körner wenigstens 4,5 Gew.-% Salz, bezüglich des Gesamtgewichts der nicht geplatzten Körner, aufweisen.

11. Erzeugnis nach Anspruch 10, aufweisend eine Verpackung für Mikrowellen mit einer Füllung der nicht geplatzten Körner.

## Revendications

1. Procédé d'aromatisation de grains de popcorn non éclatés comprenant les étapes consistant à :
i) appliquer une portion d'un mélange comprenant de l'eau et un adhésif choisi parmi une maltodextrine et une gomme alimentaire sur les grains non éclatés ;
ii) après l'étape i), appliquer une portion de sel en poudre sur lesdits grains, en maintenant lesdits grains à une température de 50°C à 70°C, et l'étape consistant à :
iii) alterner de façon cyclique les étapes i) et ii) jusqu'à ce que chacune desdites étapes soit réalisée au moins deux fois pour former un revêtement de sel sur lesdits grains pendant que lesdits grains sont maintenus à une température de 50°C à 70°C, une répétition de l'une quelconque des étapes i) et ii) étant réalisée dans un intervalle de temps inférieur à 4 minutes.

2. Procédé selon la revendication 1, dans lequel ledit mélange incluant de l'eau et un adhésif comprend un agent aromatisant.

3. Procédé selon l'une quelconque des revendications précédentes, dans lequel, dans l'étape iii), lesdites étapes i) et ii) sont répétées de 4 à 8 fois chacune.

4. Procédé selon l'une quelconque des revendications précédentes, dans lequel, avant l'étape i), une étape de préchauffage desdits grains à une température de 40°C à 50°C est réalisée.

5. Procédé selon la revendication 4, dans lequel, avant l'étape de préchauffage des grains, une étape de traitement desdits grains avec une solution alcaline pour augmenter la perméabilité de l'enveloppe du grain est réalisée.

6. Procédé selon l'une quelconque des revendications précédentes, dans lequel, dans les étapes ii) et iii), ladite température va de 55°C à 65°C.

7. Procédé selon l'une quelconque des revendications précédentes, dans lequel l'étape iii) est réalisée en maintenant les grains en mouvement continu.

8. Procédé selon l'une quelconque des revendications précédentes, dans lequel, dans l'étape ii), une portion d'un arôme substitut de la graisse est appliquée.

9. Procédé selon l'une quelconque des revendications précédentes, dans lequel, après l'étape iii), une étape de conditionnement des grains de maïs non éclatés sans graisse ni huile est réalisée.

10. Produit de grains de popcorn non éclatés obtenu par le procédé selon l'une quelconque des revendications 1-9, **caractérisé en ce que** lesdits grains comportent un revêtement obtenu en alternant de façon cyclique l'application de liquide adhésif et de sel en poudre, et **en ce que** lesdits grains comprennent au moins 4,5 % en poids de sel par rapport au poids total des grains non éclatés.

11. Produit selon la revendication 10, comprenant un emballage pour micro-ondes incluant une charge desdits grains non éclatés.
